# EUROPEAN PATENT SPECIFICATION

(11) **EP 1 684 591 B1**
(45) Date of publication and mention of the grant of the patent: **02.06.2010**
(21) Application number: 04796660.1
(22) Date of filing: 28.10.2004
(51) Int. Cl.: A22C 11/00, A22C 11/02

(54) **APPARATUS AND METHOD TO NET FOOD PRODUCTS IN SHIRRED TUBULAR CASING**
VORRICHTUNG UND VERFAHREN ZUM EINNETZEN VON LEBENSMITTELN IN EINER GERAFFTEN, SCHLAUCHFÖRMIGEN HÜLLE
APPAREIL ET PROCEDE DE MISE SOUS FILET DE PRODUITS ALIMENTAIRES DANS DU BOYAU FRONCE TUBULAIRE

(30) Priority: 28.10.2003 US 695115; 15.06.2004 US 867977
(43) Date of publication of application: 02.08.2006
(73) Proprietor: POLY-CLIP SYSTEM CORP., Mundelein, IL 60060 (US)
(72) Inventor: MYSKER, Thomas, Twin Lakes, WI 53181 (US)
(74) Representative: Hackett, Sean James
(86) International application number: PCT/US2004/035825
(87) International publication number: WO 2005/044020

(56) References cited:
- US-A- 5 024 041

## Description

### BACKGROUND OF THE INVENTION

This invention relates to the field of preparing food products in shirred, tubular casings and enclosing the products in netting. As used in this specification, the term "shir" refers to the process of gather a continuous tube of casing material over a tube or horn. The term "ruck" means to shir netting over a tube or horn. Traditionally, meat products were wrapped in netting prior to processing. Removal of the netting after processing, whether it be cooking, smoking, curing, aging, or otherwise, often resulted in some of the meat products sticking to the netting and being pulled off during the removal process, leaving an unsightly appearance unpleasant to consumers.

The use of edible collagen films solved this problem. Meat products, including sausages and whole-muscle products, are now conventionally enveloped into a tubular shape in an edible collagen film. In the prior art, flat sheets of collagen film are turned over plows to form a sausage casing. The casing is then wrapped in a net and the product is further processed, such as cooking, aging, or smoking. After processing, the netting is removed easily, as it does not stick to the collagen film. Various collagen films can be used, including flavored and colored films, to create various taste sensations or appearances.

The use of flat sheets of collagen films requires the use of complicated plows and guides, as noted in United States Patent No. 4,958, 477 to Winkler. The use of such an arrangement requires extended set up time and diligent supervision during operation. This method also produces quite a bit of overlap of film and allows food product to leak at the seams if insufficient overlap is not present. Accordingly, this method inefficiently wastes film. US Patent Specification 5,024,041 describes a filling horn adapted to receive extruded food products and having an outside diameter on which a tubular casing is positioned; a shir housing having a diameter greater than said outside diameter of said filling horn and located coaxially to said filling horn, and a netting tube releasably attached to said shir housing.

The use of netting provides a mesh or dimpled appearance on the surface of the food products. Having a dimpled appearance is considered more appealing to consumers, so there is an advantage to being able to create a highly-dimpled appearance in a food product, especially sausages and hams and other smoked products.

Accordingly, a need exists for a simpler, more efficient, easier way to encase food products in collagen film, requiring less set up time, less supervision, and producing a highly-dimpled end product. The present invention fills this need.

It is an aim of this invention to create an apparatus and method of packing food products in a tubular edible collagen film, rather than wrapping the food products in cylindrical form in flat sheets of collagen film. It is a further aim of this invention to package the food products in a tubular collagen film of a larger diameter than the netting, in order to emphasize the dimpled appearance of the products. Although an embodiment of the invention will be described for the use of sausage, it can be used for any product, including whole-muscle meats, cheeses, vegetarian sausage, or any other product in which a dimpled appearance is desired.

### BRIEF SUMMARY OF THE INVENTION

According to the present invention, there is provided, in combination, an apparatus to net a food product as defined in claim 1 below. According to the present invention, there is further provided a method of creating a dimpled appearance on a food product as claimed in claim 2 below. According to the present invention, there is yet further provided an apparatus to create a dimpled appearance on a food product as claimed in claim 4 below.

In embodiments of the present invention, tubular shirred casing are used rather than sheets of casing film, and the extrusion of the food products into a casing of larger diameter than the netting cause the netting to constrict around the casing, leaving a dimpled appearance. Food products, either sausages or whole-muscle meats, are extruded through a tube or horn through a shir housing on which a tubular edible collagen film has been shirred. In one embodiment, the shir housing is coaxial to a netting tube on which netting, of smaller diameter than that of the collagen film, has been rucked. As the food products exit the shir housing and extrude into the tubular film, they expand the film, pushing that film outwards and against the netting. Since the collagen film is of a larger diameter than the netting, the pressure of the food products against the collagen film creates a dimpled appearance in that film. In another embodiment, the netting is carried on a removable tube.

### BRIEF DESCRIPTION OF THE DRAWINGS

FIGURE 1 is a cross-sectional view of the apparatus of one embodiment of the present invention.
FIGURE 2 is a cross-sectional view of an embodiment of the apparatus of the present invention, showing the film shirred thereon.
FIGURE 3 is a cross-sectional view of an embodiment of the apparatus of the present invention, showing the netting rucked thereon.
FIGURE 4 is an elevation view of a removable tube as used in one embodiment of the present invention.
FIGURE 5 is a cross-sectional view of the apparatus of the present invention, with the removable tube of FIGURE 4 in use.
FIGURE 6 is a perspective view of a tube holder as used in one embodiment of the present invention.
FIGURE 7 is a cross-sectional view of an embodiment of the apparatus of the present invention, with the tube holder of FIGURE 6 in use.
FIGURE 8 is a cross-sectional view of an embodiment of the apparatus of the present invention with the removable tube of FIGURE 4 attached directly thereon by means of a cover.
FIGURE 9 is a flow diagram of an embodiment of the method of the present invention.
FIGURE 10 is a flow diagram of another embodiment of the method of the present invention.
FIGURE 11 is a side view of a tubular edible collagen film which can be used in present invention.

### DETAILED DESCRIPTION OF THE PREFERRED EMBODIMENTS OF THE INVENTION

While the invention may be susceptible to embodiment in different forms, there is shown in the drawings, and herein will be described in detail, specific embodiments with the understanding that the present disclosure is to be considered an exemplification of the principles of the invention, and is not intended to limit the invention to that as illustrated and described herein.

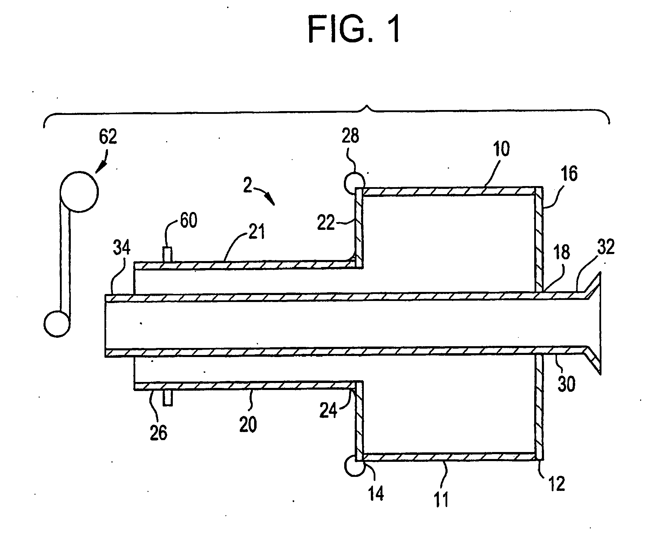

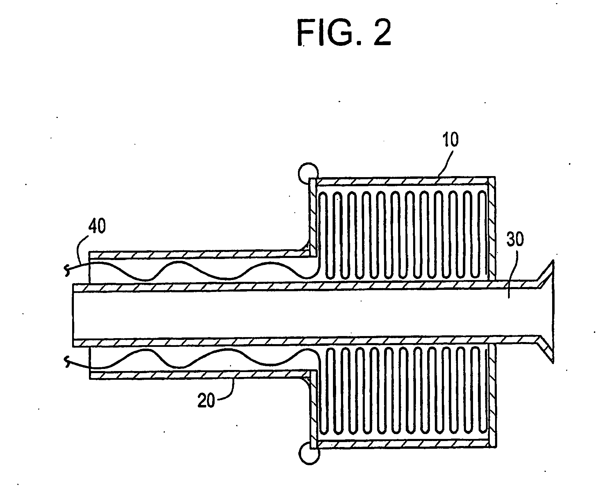

The apparatus 2 comprises a shir housing 10, a netting tube 20, and a filling horn 30, as shown in FIGURE 1. The filling horn 30 is a long tube that attaches to and protrudes horizontally from a standard food preparation apparatus, not pictured, such as a conventional sausage-making machine. Tubular edible collagen film 40 is shirred onto the filling horn 30 prior to use, as shown in FIGURE 2, which illustrates the filling horn 30 with the film 40 shirred onto the filling horn 30. As shown in FIGURE 2, the film 40 is of a greater diameter than the outside diameter of the filling horn 30. Accordingly, when the film 40 is shirred onto filling horn 30, film 40 is bunched up at the upstream end 32 of filling horn 30.

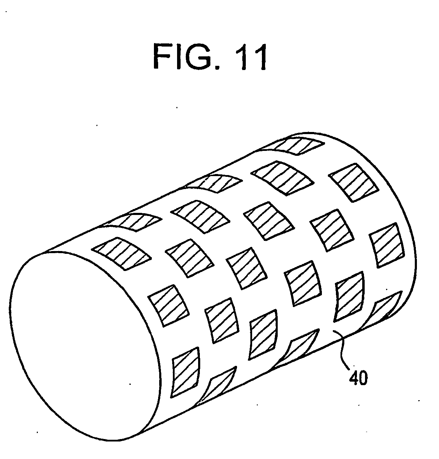

The tubular edible collagen film 40 can be dyed, and can be dyed in.a pattern, see FIGURE 11. The tubular edible collagen film 40 can have flavoring, which can be smoke flavoring.

The shir housing 10 is also a tube 11 of larger diameter than that of the filling horn 30, so that the bunched-up film 40 will fit between filling horn 30 and shir housing 10. In the preferred embodiment, the shir housing 10 has a seven-inch diameter while the filling horn 30 has a three-inch diameter. The shir housing 10 is welded at its upstream end 12 to a back plate 16. The back plate 16 attaches to the sausage-making machine and contains an aperture 18 through which the filling horn 30 extends. Accordingly, the filling horn 30 is coaxial to and inside of the shir housing 10. The filling horn 30 can either sit snugly within the aperture 18, or can be sealed with a suitable gasket, or can be welded directly to the back plate 16.

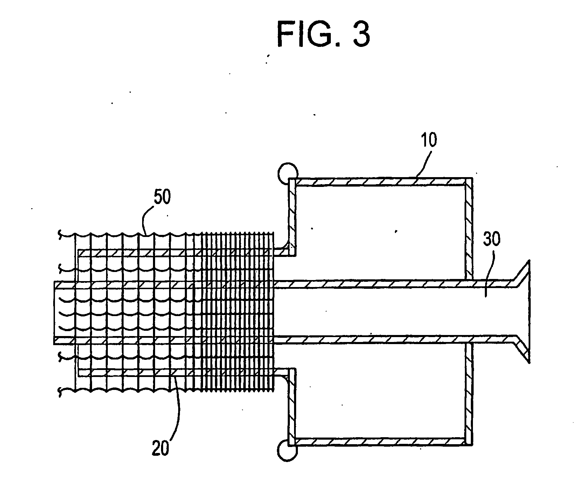

The netting tube 20 in a first embodiment is an elongated tubular member 21 welded to a transition plate 22 at its upstream end 24. The netting tube 20 attaches to the shir housing 10 at the downstream end 14 of the shir housing 10. Preferably, fasteners 28 sold under the brand name QUICK LOCK® are used, but any convenient means of attachment will suffice, such as bayonet pins, locking pins, threaded fasteners, interference fit, or anything else that attaches the transition plate 22 of the netting tube 20 to the shir housing 10. In this embodiment, netting 50 is rucked onto netting tube 20 as shown in FIGURE 3. The netting 50 is of a smaller diameter than that of the tubular film 40. Accordingly, the netting tube 20 is of an intermediate diameter to that of the shir housing 10 and the filling horn 30. In the preferred embodiment, the netting tube 20 has a diameter of four inches.

In this embodiment, a break ring 60 can be placed on the downstream end 26 of the netting tube 20, to rectify the release of netting 50 from the netting tube. Preferably, however, a derucking rectifier is used in order to obtain sausages of consistent length.

A user of apparatus 2 will preferably have at least two netting tubes 20. While one netting tube 20 is attached to apparatus 2 and being used to make, for example, sausage, as will be described below, a spare netting tube 20 will be in the process of having netting 50 rucked onto it. Netting often comes from a manufacturer wound circumferentially on a tube, and must be rucked onto a netting tube 20, preferably by an apparatus such as is described in United States Patent Application No. 10/675,440, Improved Net Rucking Apparatus and Method, filed on September 30, 2003.

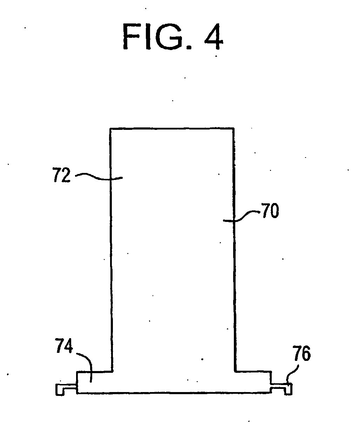

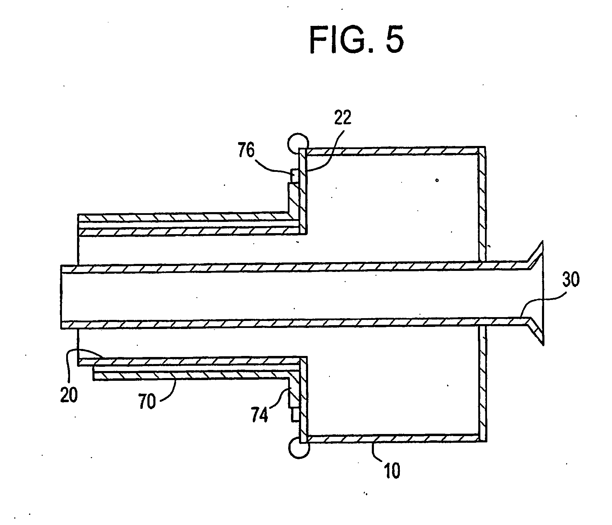

In another embodiment, netting 50 is purchased already rucked onto a removable tube 70. Removable tube 70, as illustrated in FIGURE 4 without netting 50, is preferably plastic and can be a disposable or recyclable plastic. Removable tube 70 is an elongated tubular section 72 and a base plate 74. In this embodiment, base plate 74 locks onto transition plate 22, as shown in FIGURE 5. Base plate 72 preferably is configured to lock onto transition plate 22 with a bayonet-lock arrangement 76 but any type of attachment, such as fasteners 28 sold under the brand name QUICK LOCK®, locking pins, threaded fasteners, interference fit, or other means will suffice. In this embodiment, the user of apparatus 2 does not need to have multiple netting tubes 20 or a separate net rucking apparatus, since the netting 50 is rucked onto removable tube 70 by an outside vendor.

Please note that a break ring 60 can be used to rectify the rate at which netting 50 comes off removable tube 70.

If removable tube 70 is used, several alternative arrangements are possible for netting tube 20. In one embodiment, netting tube 20 is as described above in connection with FIGURE 5. Removable tube 70 slides over netting tube 20 and locks onto transition plate 22. The user of apparatus 2 then has the option of using netting 50 that has already been rucked onto removable tubes 70, or using a separate rucking apparatus as described above to ruck netting 50 onto netting tube 20.

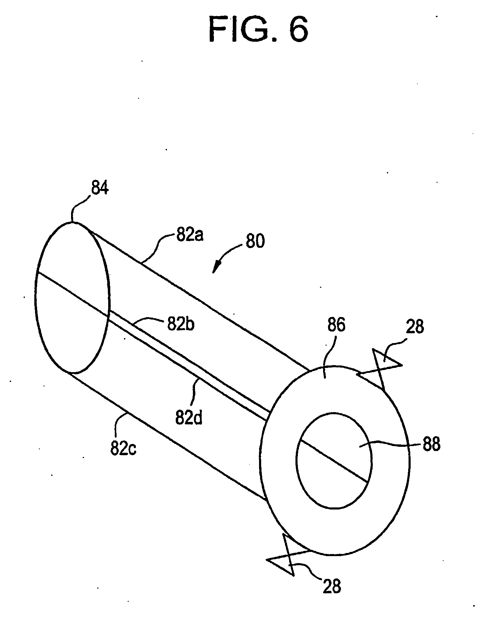

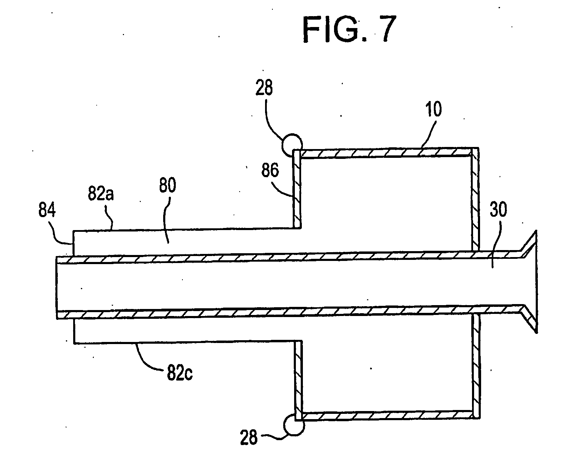

Alternatively, instead of netting tube 20, tube holder 80, as shown in FIGURE 6, can be used in conjunction with removable tube 70. Tube holder 80 is at least two rods but in this embodiment preferably four rods 82a, 82b, 82c, and 82d, which span and connect downstream ring 84 and attachment disc 86. Attachment disc 86 has the same outside diameter as shir housing 10 and connects to shir housing 10 by fasteners 28 sold under the brand name QUICK LOCK®, in the same manner as transition plate 22 connected to shir housing 10 as described above. Attachment disc 86 defines annular aperture 88 through which-filling horn 30 projects. FIGURE 7 shows tube holder 80 as attached to shir housing 10. In this configuration, removable tube 70 slides over tube holder 80 and base plate 74 locks onto attachment disc 86.

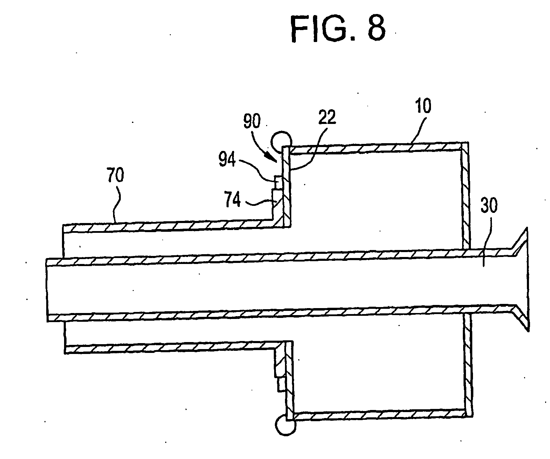

In another embodiment, cover 90 is a flat disc defining annular aperture 92. Cover 90 attaches to shir housing 10 by means of fasteners 28 sold under the brand name QUICK LOCK®, in the same manner as transition plate 22 connected to shir housing 10 as described above. In this embodiment, base plate 74 of removable tube 70 locks onto cover 90 with a bayonet-lock arrangement 94, similar to how tubular holder 70 locks onto transition plate 22 as described above. Thus, tubular holder 70 attached directly to cover 90, and therefore to shir housing 10, without any internal support, as shown in FIGURE 8. In this embodiment, removable tube 70 must have sufficient structural strength to maintain a horizontal configuration.

In the use of apparatus 2, the filling horn 30 protrudes from the sausage-making machine and has a length of tubular edible collagen film 40 shirred onto it. The film 40 is protected by the shir housing 10, which surrounds the netting tube 20 near the upstream end 24 of the netting tube 20. In some embodiments, the netting tube 20 extends downstream from the shir housing 10 and holds the netting 50 in place. In another embodiment, netting 50 is held in place on removable tube 70, which either slides over netting tube 20, over tube holder 80, or locks directly onto shir housing 10 via cover 90. A conventional clipper 62 is located at the downstream end 34 of the filling horn 30.

The tubular film 40 is shirred onto the filling horn 30 and past the downstream end 34 of the filling horn 30. The netting 50 surrounds film 40 coaxially. Upon first use, the end of the netting 50 and the end of the film 40 are clipped by clipper 62. The clip applied here will become one end of the first sausage made by the apparatus 2. (Please note, however, that the first sausage is likely to contain quite a bit of air. It is recommended to bleed as much air out of the system as possible before applying the first clip.)

The sausage meat, having been made in the sausage-making machine, is extruded under pressure in a conventional manner into the bore of the filling horn 30. As the sausage meat progresses downstream through the filling horn 30, it pushes the tubular film 40 off the filling horn 30 and out the downstream end of the apparatus 2, and pushes the netting 50 off the netting horn 20 or removable tube 70. As the film 40 is pushed off the filling horn 30, it expands outward against the netting 50 from the pressure of the sausage meat. Since the netting 50 is of a smaller diameter than that of the film 40, the film 40 will bulge through the spaces in the netting 50, creating the dimpled appearance that is an object of the invention.

After a sufficient length of sausage has been extruded, the clipper 62 squeezes the netting 50 and film 40, applies two clips, and severs the sausage between the two clips in a conventional manner. The sausage is now ready for further processing, such as cooking or smoking. The next sausage is ready for filling as described above and the process continues as set forth above.

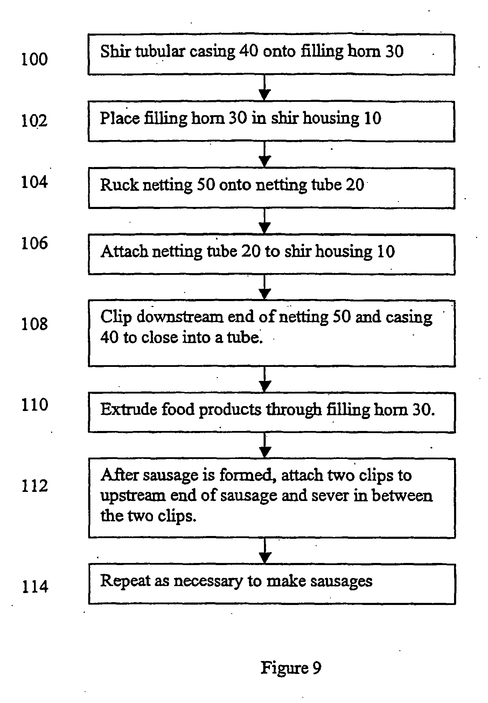

The steps of the method of one embodiment of the present invention are shown in box diagram form in FIGURE 9. These steps are to shir the tubular casing 40 onto the filling horn 30 (step 100), place the filling horn 30 in the shir housing 10 (step 102), ruck netting 50 onto a netting tube 20 (step 104), attach netting tube 20 to shir housing 10 (step 106), clip the downstream end of netting 50 and film 40 to close an end of a tube (step 108), extrude food products through filling horn 30 (step 110), form sausages, attach two clips, and sever (step 112) and repeat the process (step 114).

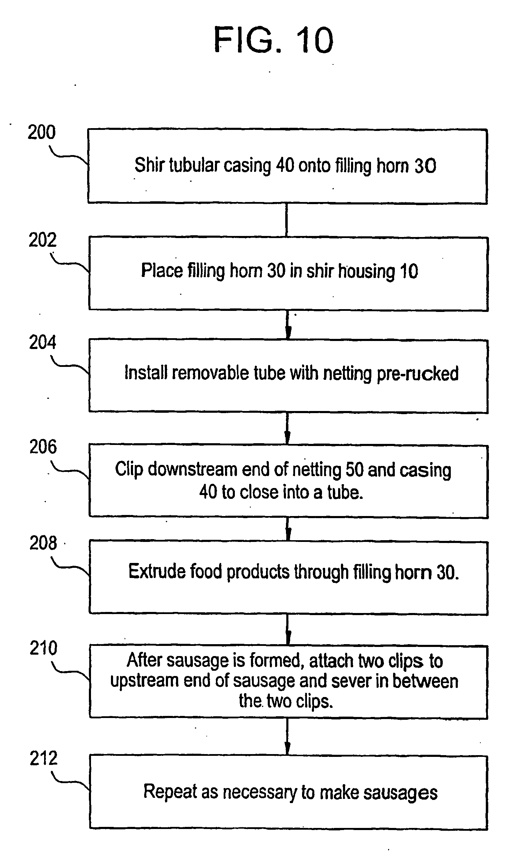

The steps of another embodiment are shown in box diagram form in FIGURE 10. These steps are to shir the tubular casing 40 onto the filling horn 30 (step 200), place the filling horn 30 in the shir housing 10 (step 202), install removable tube (on which netting is already rucked) onto shir housing (step 204), clip the downstream end of netting 50 and film 40 to close an end of a tube (step 206), extrude food products through filling horn 30 (step 208), form sausages, attach two clips, and sever (step 210) and repeat the process (step 212).

In either embodiment as described, the sausage product is ready for further processing, such as cooking or smoking.

## Claims

1. In combination, an apparatus to net a food product, a casing and netting, comprising:
a casing (40) having a filled dimension when filled with a food product;
a netting (50); and
an apparatus including:
a filling horn (30) defining a bore for receiving extruded food products and having a cross-sectional dimension, said filling horn receiving said casing, said filled dimension of said casing being greater than said cross-sectional dimension of said filling horn, and
a shir housing (10) attachable coaxially to said filling horn and having an outside dimension greater than said outside dimension of said filling horn, **characterised by**
the netting (50) having an outside dimension less than said filled dimension;
a netting housing (20) attached to said shir housing (10) coaxially to said filling horn for receiving said netting, and by the fact that
food products extruded from said filling horn into said casing expand said casing against said netting to create a dimpled appearance in the food product.

2. A method of creating a dimpled appearance on a food product, comprising:
shirring a casing (40) having a filled cross-sectional dimension onto a filling horn (30) having a cross-sectional dimension less than said filled cross-sectional dimension of said casing;
rucking a netting (50) having a cross-sectional dimension less than said filled cross-sectional dimension of said casing onto a netting housing (20);
attaching said netting housing to said filling horn(30);
extruding food products through said filling horn, whereby the food products expand said casing against said netting to create a dimpled appearance in the food product.

3. The method of claim 2 further comprising clipping said casing and said netting.

4. An apparatus to create a dimpled appearance on a food product, comprising:
a filling horn (30) defining a bore for receiving extruded food products and having a cross-sectional dimension, said filling horn (30) adapted to receive a shirred casing having a cross-sectional dimension greater than said cross-sectional dimension of said filling horn,
a shir housing (10) attachable coaxially to said filling horn and having an outside dimension greater than said outside dimension of said filling horn, **characterised by** a netting housing (20) releasably attached to said shir housing coaxially to said filling horn and adapted to receive rucked netting having an outside dimension less than said cross-sectional dimension of said casing, and by the fact that
food products extruded through said filling horn expand said casing against netting to create a dimpled appearance in the food product.

5. The combination of claim 1 or the apparatus of claim 4, wherein said netting housing (20) is releasably attached to said shir housing (10).

6. The combination of claim 5 or the apparatus of claim 5, wherein said netting housing (20) includes a tubular wall (21) and a back plate (16) to which the tubular wall is attached, said back plate being attached to said shir housing (10).

7. The combination of claim 1 or the apparatus of claim 4, wherein said netting housing (20) is formed of at least two rods (82a, 82b, 82c, 82d) spanning between and connected to a ring (84) and an attachment disc (86), and a housing attached thereto which includes a wall (21) and a back plate (16) to which the wall is attached.

8. The combination of claim 7 or the apparatus of claim 7, wherein said housing of said netting housing (20) is releasably attached to said rods.

9. The combination of claim 1 or the apparatus of claim 4, wherein said casing (40) and said netting (50) are tubular.

10. The combination or apparatus of claim 9, wherein said netting housing is tubular.

11. The combination of claim 1 or the apparatus of claim 3, further comprising a clipper.

12. The combination of claim 4 or the apparatus of claim 3, wherein said casing (40) is edible.

13. The combination of claim 1 or the apparatus of claim 4, wherein said casing (40) is dyed.

14. The combination or apparatus of claim 13, wherein said casing (40) is dyed in a pattern.

15. The combination of claim 1 or the apparatus of claim 4, wherein said casing (40) further comprises flavouring.

## Patentansprüche

1. In Kombination eine Vorrichtung zum Einnetzen eines Nahrungserzeugnisses, eine Hülle und ein Netzgewebe, die Folgendes umfassen:
eine Hülle (40), die eine gefüllte Abmessung hat, wenn sie mit einem Nahrungserzeugnis gefüllt ist,
ein Netzgewebe (50), das eine Außenabmessung hat, die geringer ist als die gefüllte Abmessung, und
eine Vorrichtung, die Folgendes einschließt:
einen Einfülltrichter (30), der eine Bohrung zum Aufnehmen von extrudierten Nahrungserzeugnissen definiert und eine Querschnittsabmessung hat, wobei der Einfülltrichter die Hülle aufnimmt, wobei die gefüllte Abmessung der Hülle größer ist als die Querschnittsabmessung des Einfülltrichters, und
ein Kräuselgehäuse (10), das koaxial an dem Einfülltrichter befestigt werden kann und eine Außenabmessung hat, die größer ist als die Außenabmessung des Einfülltrichters, **dadurch gekennzeichnet dass**
das Netzgewebe (50) eine Außenabmessung hat, die geringer ist als die gefüllte Abmessung,
ein Einnetzgehäuse (20), das koaxial zu dem Einfülltrichter an dem Kräuselgehäuse (10) befestigt ist, um das Netzgewebe aufzunehmen, und dass
die aus dem Einfülltrichter in die Hülle extrudierten Nahrungserzeugnisse die Hülle gegen das Netzgewebe ausdehnen, um ein Erscheinungsbild mit Grübchen in dem Nahrungserzeugnis zu erzeugen.

2. Verfahren zum Erzeugen eines Erscheinungsbildes mit Grübchen an einem Nahrungserzeugnis, wobei das Verfahren Folgendes umfasst:
Kräuseln einer Hülle (40), die eine gefüllte Querschnittsabmessung hat, auf einen Einfülltrichter (30), der eine Querschnittsabmessung hat, die geringer ist als die gefüllte Querschnittsabmessung der Hülle,
Zusammenschieben eines Netzgewebes (50), das eine Querschnittsabmessung hat, die geringer ist als die gefüllte Querschnittsabmessung der Hülle, auf ein Einnetzgehäuse (20),
Befestigen des Einnetzgehäuses an dem Einfülltrichter (30),
Extrudieren von Nahrungserzeugnissen durch den Einfülltrichter, wodurch die Nahrungserzeugnisse die Hülle gegen das Netzgewebe ausdehnen, um ein Erscheinungsbild mit Grübchen in dem Nahrungserzeugnis zu erzeugen.

3. Verfahren nach Anspruch 2, das ferner umfasst, die Hülle und das Netzgewebe abzuschneiden.

4. Vorrichtung zum Erzeugen eines Erscheinungsbildes mit Grübchen an einem Nahrungserzeugnis, wobei die Vorrichtung Folgendes umfasst:
einen Einfülltrichter (30), der eine Bohrung zum Aufnehmen von extrudierten Nahrungserzeugnissen definiert und eine Querschnittsabmessung hat, wobei der Einfülltrichter (30) dafür eingerichtet ist, eine gekräuselte Hülle aufzunehmen, die eine Querschnittsabmessung hat, die größer ist als die Querschnittsabmessung des Einfülltrichters,
ein Kräuselgehäuse (10), das koaxial an dem Einfülltrichter befestigt werden kann und eine Außenabmessung hat, die größer ist als die Außenabmessung des Einfülltrichters, **gekennzeichnet durch**
ein Einnetzgehäuse (20), das lösbar koaxial zu dem Einfülltrichter an dem Kräuselgehäuse (10) befestigt ist, und dafür eingerichtet ist, ein zusammengeschobenes Netzgewebe aufzunehmen, das eine Querschnittsabmessung hat, die größer ist als die Querschnittsabmessung der Hülle, und **durch** die Tatsache, dass
die aus dem Einfülltrichter in die Hülle extrudierten Nahrungserzeugnisse die Hülle gegen das Netzgewebe ausdehnen, um ein Erscheinungsbild mit Grübchen in dem Nahrungserzeugnis zu erzeugen.

5. Kombination nach Anspruch 1 oder Vorrichtung nach Anspruch 4, wobei das Einnetzgehäuse (20) lösbar an dem Kräuselgehäuse (10) befestigt ist.

6. Kombination nach Anspruch 5 oder Vorrichtung nach Anspruch 5, wobei das Einnetzgehäuse (20) eine röhrenförmige Wand (21) und eine Rückplatte (16), an der die röhrenförmige Wand befestigt ist, einschließt, wobei die Rückplatte an dem Kräuselgehäuse (10) befestigt ist.

7. Kombination nach Anspruch 1 oder Vorrichtung nach Anspruch 4, wobei das Einnetzgehäuse (20) aus wenigstens zwei Stangen (82a, 82b, 82c, 82d), die sich zwischen einem Ring (84) und einer Befestigungsscheibe (86) spannen und mit denselben verbunden sind, und einem daran befestigten Gehäuse geformt ist, das eine Wand (21) und eine Rückplatte (16), an der die Wand befestigt ist, einschließt.

8. Kombination nach Anspruch 7 oder Vorrichtung nach Anspruch 7, wobei das Gehäuse des Einnetzgehäuses (20) lösbar an den Stangen befestigt ist.

9. Kombination nach Anspruch 1 oder Vorrichtung nach Anspruch 4, wobei die Hülle (40) und das Netzgewebe (50) röhrenförmig sind.

10. Kombination oder Vorrichtung nach Anspruch 9, wobei das Einnetzgehäuse röhrenförmig ist.

11. Kombination nach Anspruch 1 oder Vorrichtung nach Anspruch 3, die ferner eine Klemmvorrichtung umfasst.

12. Kombination nach Anspruch 4 oder Vorrichtung nach Anspruch 3, wobei die Hülle (40) essbar ist.

13. Kombination nach Anspruch 1 oder Vorrichtung nach Anspruch 4, wobei die Hülle (40) gefärbt ist.

14. Kombination oder Vorrichtung nach Anspruch 13, wobei die Hülle (40) in einem Muster gefärbt ist.

15. Kombination nach Anspruch 1 oder Vorrichtung nach Anspruch 4, wobei die Hülle (40) ferner Geschmacksstoffumfasst.

## Revendications

1. Combinaison d'un appareil de mise sous filet d'un produit alimentaire, d'un boyau et d'un filet, comprenant :
un boyau (40) ayant une dimension remplie lors du remplissage d'un produit alimentaire ;
un filet (50) ayant une dimension extérieure inférieure à ladite dimension remplie ; et
un appareil englobant :
une corne de remplissage (30), définissant un alésage pour recevoir des produits alimentaires extrudés et ayant une dimension de section transversale, ladite corne de remplissage recevant ledit boyau, ladite dimension remplie dudit boyau étant supérieure à ladite dimension de section transversale de ladite corne de remplissage ; et
un boîtier de froncement (10) pouvant être fixé de manière coaxiale sur ladite corne de remplissage et ayant une dimension extérieure supérieure à ladite dimension extérieure de ladite corne de remplissage ; **caractérisé en ce que**
le filet (50) a une dimension extérieure inférieure à ladite dimension remplie ;
un boîtier de filet (20) fixé sur ledit boîtier de froncement (10) et de manière coaxiale sur ladite corne de remplissage pour recevoir ledit filet ; et **en ce que**
les produits alimentaires extrudés de ladite corne de remplissage dans ledit boyau dilatent ainsi ledit boyau contre ledit filet pour former un aspect alvéolé sur le produit alimentaire.

2. Procédé d'établissement d'un aspect alvéolé sur un produit alimentaire, comprenant les étapes ci-dessous :
application par froncement d'un boyau (40) ayant une dimension de section transversale remplie sur une corne de remplissage (30), ayant une dimension de section transversale inférieure à ladite dimension de section transversale dudit boyau ;
application par plissement d'un filet (50) ayant une dimension de section transversale inférieure à ladite dimension de section transversale dudit boyau sur un boîtier de filet (20) ;
fixation dudit boîtier de filet sur ladite corne de remplissage (30) ;
extrusion des produits alimentaires à travers ladite corne de remplissage, les produits alimentaires dilatant ainsi ledit boyau contre ledit filet pour former un aspect alvéolé sur le produit alimentaire.

3. Procédé selon la revendication 2, comprenant en outre l'étape de fermeture par attache dudit boyau et dudit filet.

4. Appareil pour former un aspect alvéolé sur un produit alimentaire, comprenant :
une corne de remplissage (30), définissant un alésage pour recevoir des produits alimentaires extrudés et ayant une dimension de section transversale, ladite corne de remplissage (30) étant adaptée pour recevoir un boyau froncé ayant une dimension de section transversale supérieure à ladite dimension de section transversale de ladite corne de remplissage ;
un boîtier de froncement (10) pouvant être fixé de manière coaxiale sur ladite corne de remplissage et ayant une dimension extérieure supérieure à ladite dimension extérieure de ladite corne de remplissage, **caractérisé par**
un boîtier de filet (20), fixé de manière amovible sur ledit boîtier de froncement et de manière coaxiale par rapport à ladite corne de remplissage et adapté pour recevoir un filet plissé ayant une dimension extérieure inférieure à ladite dimension de section transversale dudit boyau, et par le fait que
les produits alimentaires extrudés à travers ladite corne de remplissage dilatent ledit boyau contre le filet pour former un aspect alvéolé sur le produit alimentaire.

5. Combinaison selon la revendication 1 ou appareil selon la revendication 4, dans laquelle ledit boîtier de filet (20) est fixé de manière amovible sur ledit boîtier de froncement (10).

6. Combinaison selon la revendication 5 ou appareil selon la revendication 5, dans laquelle ledit boîtier de filet (20) englobe une paroi tubulaire (21) et une plaque arrière (16) sur laquelle est fixée la paroi tubulaire, ladite plaque arrière étant fixée sur ledit boîtier de froncement (10).

7. Combinaison selon la revendication 1 ou appareil selon la revendication 4, dans laquelle ledit boîtier de filet (20) est composé d'au moins deux tiges (82a, 82b, 82c, 82d) s'étendant entre une bague (84) et un disque de fixation (86) et fixées à ceux-ci, et un boîtier qui y est fixé et qui englobe une paroi (21) et une plaque arrière (16) sur laquelle est fixée la paroi.

8. Combinaison selon la revendication 7 ou appareil selon la revendication 7, dans laquelle ledit boîtier dudit boîtier de filet (20) est fixé de manière amovible sur lesdites tiges.

9. Combinaison selon la revendication 1 ou appareil selon la revendication 4, dans laquelle ledit boyau (40) et ledit filet (50) sont tubulaires.

10. Combinaison ou appareil selon la revendication 9, dans laquelle ledit boîtier de filet est tubulaire.

11. Combinaison selon la revendication 1 ou appareil selon la revendication 3 comprenant en outre une agrafeuse.

12. Combinaison selon la revendication 4 ou appareil selon la revendication 3, dans laquelle ledit boyau (40) est comestible.

13. Combinaison selon la revendication 1 ou appareil selon la revendication 4, dans laquelle ledit boyau (40) est teint.

14. Combinaison ou appareil selon la revendication 13, dans laquelle ledit boyau (40) est teint dans un motif.

15. Combinaison selon la revendication 1 ou appareil selon la revendication 4, dans laquelle ledit boyau (40) comprend en outre de l'arôme.
